Europäisches Patentamt

European Patent Office

Office européen des brevets

(11) Veröffentlichungsnummer: **0 157 079**
**A2**

(12) ## EUROPÄISCHE PATENTANMELDUNG

(21) Anmeldenummer: 85100294.9

(22) Anmeldetag: 14.01.85

(51) Int. Cl.⁴: **C 08 L 21/00**, C 08 K 3/00, C 08 K 5/00, C 08 C 19/08

(30) Priorität: 26.01.84 DE 3402626

(43) Veröffentlichungstag der Anmeldung: 09.10.85 Patentblatt 85/41

(84) Benannte Vertragsstaaten: **DE FR GB IT**

(71) Anmelder: **BAYER AG, Konzernverwaltung RP Patentabteilung, D-5090 Leverkusen 1 Bayerwerk (DE)**

(72) Erfinder: **Fischer, Heinz, Dr., Bitterfelder Strasse 6, D-4370 Marl (DE)**

(54) Verfahren und Mittel zur Viskositätserniedrigung von Elastomeren.

(57) Als Cokatalysatoren bei der Mastikation von Dienelastomeren eignen sich

a) Eisen(II)- und Eisen(III)-Salze von anorganischen Säuren,

b) Eisen(II)- und Eisen(III)-Salze von organischen Carbonsäuren,

c) Eisen(II)- und Eisen(III)-Salze von aromatischen Mercaptanen,

d) Eisen(II)- und Eisen(III)-Komplexe mit Ethylendiamintetraessigsäure

e) Eisen(II)- und Eisen(III)-Cyanidkomplexe,

f) Eisen(II)- und Eisen(III)-Komplexe mit Dimethylglyoxim und

g) Eisen(II)- und Eisen(III)-Salze der Chinolincarbonsäure und der Sulfosalicylsäure.

0157079

- 1 -

BAYER AKTIENGESELLSCHAFT      5090 Leverkusen, Bayerwerk
Konzernverwaltung RP
Patentabteilung              Jo/ABc


Verfahren und Mittel zur Viskositätserniedrigung von
Elastomeren

---

Die Erfindung betrifft ein Mittel und ein Verfahren zur
Viskositätserniedrigung von Elastomeren durch Mastikation
mit Hilfe von üblichen Mastiziermitteln und neuartigen
Mastikationscokatalysatoren.

Bei der Herstellung von Produkten aus vulkanisierten
Dienelastomeren müssen die Molekulargewichte und damit
die Viskosität der Dienelastomere, insbesondere bei
Naturkautschuk reduziert werden, um sie für Elastomermischungsbestandteile wie Füllstoffe, Weichmacher, Verarbeitungshilfsmittel, Aktivatoren und Stabilisatoren
aufnahmebereit zu machen. Dabei ist es notwendig, das
Elastomer so weit abzubauen, daß nach der Einarbeitung
der erforderlichen Kautschukmischungsbestandteile die
Viskosität der Elastomermischung ausreichend niedrig
ist. Die niedrige Viskosität der Elastomermischung ist
erforderlich, um die Verarbeitbarkeit der Elastomermischung während der darauffolgenden Verfahrensschritte

Le A 21 904

wie Aufwärmen, Extrudieren, Kalandrieren, Lösen und
Kneten zu verbessern. Der Elastomerabbau ermöglicht
eine niedrige Wärmeentwicklung während des Aufwärmens,
eine niedrige Wärmeentwicklung, niedrige Quellung,
glatte Extrudatoberflächen und höhere Extrusionsgeschwindigkeiten bei der Extrusion, niedrigere Lösungsmittelmengen zur Herstellung von Elastomerlösungen
einer bestimmten Viskosität, höhere Feststoffgehalte
von Mischungen bei vergleichsweise niedrigen Viskositäten für Beschichtungsverfahren, niedriger Schrumpf
und glatte Oberflächen von kalandrierten Fellen und
für den Fertigungsprozeß leicht verarbeitbare Mischungen.

Der Molekulargewichtsabbau der Dienelastomere (Mastikation oder Peptisation) wird üblicherweise in Walzwerken,
Innenmischern oder Knetern durchgeführt. Die Mastikation
der Elastomere erfordert teure und starke Maschinen.
Der Energieverbrauch des Verfahrens ist hoch. Um die
Effektivität der Mastikation zu verbessern werden dem
Dienelastomer bestimmte Chemikalien, meistens aromatische Mercaptane oder Disulfide zugesetzt. Diese
Chemikalien werden in der Elastomerindustrie als
Paptisier- oder Mastiziermittel bezeichnet. Diese
Chemikalien wirken als Radikalakzeptoren bei der
Mastikation bei niedrigen Temperaturen und als Katalysatoren bei der Mastikation bei hohen Temperaturen
(oxidative Mastikation). In Abhängigkeit von der
Mastikationstemperatur werden von diesen Chemikalien
0,05 bis 3 Gew.-Teile auf 100 Gew.-Teile Elastomer
eingesetzt, wobei für Naturkautschuk bis zu 0,5 Gew.-Teile

Le A 21 904

und für synthetische Elastomere bis zu 3 Gew.-Teile verwendet werden.

Aufgabe der Erfindung ist es, die Effektivität der Mastiziermittel durch Zusatz bestimmter Chemikalien, die als Cokatalysatoren wirken, zu verbessern und dadurch das Mastikationsverfahren ökonomischer und energiesparender zu machen.

Es sind bereits einige Cokatalysatoren bekannt geworden, beispielsweise Eisenphthalocyanin, Schwermetallketoxime und Schwermetallacetonylacetate. Der Nachteil dieser Cokatalysatoren ist, daß sie die Wiederstandsfähigkeit der Vulkanisate, die aus den so mastizierten Elastomeren hergestellt werden, gegen oxidativen Abbau vermindern. Eine weitere Aufgabe der Erfindung ist es daher, solche Cokatalysatoren zu finden, die keinen Einfluß auf die Alterungseigenschaften der Vulkanisate, die aus mit Mastiziermitteln und Cokatalysatoren mastizierten Elastomeren erhalten wurden, haben und so für verbesserte Vulkanisate sorgen.

Es wurde nun gefunden, daß die erfindungsgemäße Aufgabe durch den Einsatz einer Gruppe bestimmter Eisenverbindungen als Cokatalysatoren gelöst werden kann.

Gegenstand der Erfindung ist daher ein Mastiziermittel für Dienelastomere, das als Cokatalysator eine Verbindung aus den folgenden Gruppen enthält:

Le A 21 904

a) Eisen(II)- und Eisen(III)-Salze von anorganischen Säuren,

b) Eisen(II)- und Eisen(III)-Salze von organischen Carbonsäuren,

c) Eisen(II)- und Eisen(III)-Salze von aromatischen Mercaptanen,

d) Eisen(II)- und Eisen(III)-Komplexe mit Ethylendiamintetraessigsäure

e) Eisen(II)- und Eisen(III)-Cyanidkomplexe,

f) Eisen(II)- und Eisen(III)-Komplexe mit Dimethylglyoxim und

g) Eisen(II)- und Eisen(III)-Salze der Chinolincarbonsäure und der Sulfosalicylsäure.

Zweckmäßigerweise werden 0,01 bis 10 Gew.-Teile der Cokatalysatoren auf 100 Gew.-Teile der peptisierenden Verbindung eingesetzt. Die Cokatalysatoren können als solche oder aufgebracht auf die Oberfläche eines inerten Trägers eingesetzt werden.

Ein weiterer Gegenstand der Erfindung ist ein Verfahren zur Mastikation von Dienelastomeren, dadurch gekennzeichnet, daß das erfindungsgemäße Mastiziermittel verwendet wird.

Die folgenden Tabellen zeigen Einzelheiten der erfindungsgemäß zu erzielenden Vorteile. Bei allen Untersuchungen der Tabelle I wurde Naturkautschuk (smoked sheets) in einem Innenmischer unterschiedlich lange mastiziert. Anschließend wurde der Viskositätsabbau durch Messung

Le A 21 904

0157079

der Mooney-Viskosität bei 100°C bestimmt. Die Aktivität der peptisierenden Verbindung oder des Mittels aus peptisierender Verbindung und Cokatalysator wird durch in kürzeren Zeiten erreichte niedrigere Viskositäten angezeigt. Als peptisierende Verbindungen wurden Pentachlorthiophenol (A) und o,o'-Dibenzamidodiphenyl-disulfid (B) verwendet. Die Dosierung ist in Gewichtsteilen auf 100 Gew.-Teile Naturkautschuk angegeben.

Die Mooney-Viskosität des nicht mastizierten Naturkautschuks, der in den Versuchen verwendet wurde, betrug ML 4/100°C : 94.

Geeignete peptisierende Verbindungen sind aromatische Mercaptane und Disulfide sowie Pentaerythritstearat und Salze höherer Carbonsäuren, beispielsweise Pentachlorthiophenol, ß-Naphthylmercaptan, Xylylmercapten, o,o'-Dibenzamiddiphenyldisulfid, o-Benzamidothiophenol und p-Tert.-butylo-thio-kresol, wobei die in den Beispielen verwendeten Produkte bevorzugt sind.

Bevorzugter Cokatalysator ist der Fe-EDTA-Komplex.

Le A 21 904

Tabelle I

| Nr. | Mastikationszeit (min) Mastiziermittel | Menge | 4 | 8 | 12 | 16 |
|---|---|---|---|---|---|---|
| 1 | - | - | 81 | 80 | 76 | 71 |
| 2 | A + Fe-Hämin-Komplex | 0,1 | 73 | 52 | 42 | 41 |
| 3 | A | 0,1 | 57 | 41 | 34 | 34 |
| 4 | B | 0,1 | 65 | 45 | 40 | 38 |
| 5 | A | 0,05 | 60 | 43 | 36 | 32 |
|   | Fe-EDTA*-Komplex | 0,0025 | | | | |
|   | auf Kaolin | 0,0475 | | | | |
| 6 | B | 0,05 | 57 | 42 | 36 | 30 |
|   | $K\underline{/}\overline{Fe}(III)Fe(II)(CN)_6\underline{7}$ | 0,0025 | | | | |
|   | auf Kaolin | 0,0475 | | | | |
| 7 | A | 0,05 | 62 | 49 | 47 | 45 |
|   | $FeSO_4$ auf | 0,0025 | | | | |
|   | Kaolin | 0,0475 | | | | |
| 8 | A | 0,05 | 60 | 47 | 45 | 42 |
|   | $Fe_3(PO_4)_2$ auf | 0,0025 | | | | |
|   | Kaolin | 0,0475 | | | | |
| 9 | A | 0,05 | 60 | 47 | 45 | 45 |
|   | Fe(II)-stearat auf | 0,0025 | | | | |
|   | Kaolin | 0,0475 | | | | |
| 10 | B | 0,05 | 66 | 45 | 39 | 37 |
|   | Fe-EDTA-Komplex auf | 0,0025 | | | | |
|   | Kaolin | 0,0475 | | | | |
| 11 | B | 0,05 | 66 | 51 | 46 | 42 |
|   | $Fe_3(PO_4)_2$ auf | 0,0025 | | | | |
|   | Kaolin | 0,0475 | | | | |

Le A 21 904

Tabelle I (Fortsetzung)

| | Mastikationszeit (min) | | 4 | 8 | 12 | 16 |
|---|---|---|---|---|---|---|
| Nr. | Mastiziermittel | Menge | | | | |
| 12 | A | 0,05 | 62 | 46 | 43 | 42 |
| | Fe(II)-chinolincarbon-säuresalz | 0,0025 | | | | |
| | auf Kaolin | 0,0475 | | | | |
| 13 | A | 0,05 | 60 | 47 | 45 | 42 |
| | Fe(II)-sulfosalicylat auf | 0,0025 | | | | |
| | Kaolin | 0,0475 | | | | |
| 14 | A | 0,05 | 63 | 47 | 43 | 41 |
| | Fe(II)-pentachlorthio-phenolat | 0,0025 | | | | |
| | auf Kaolin | 0,0475 | | | | |
| 15 | A | 0,025 | 69 | 62 | 54 | 51 |
| | Fe-EDTA-Komplex auf | 0,000025 | | | | |
| | Kaolin | 0,000475 | | | | |
| 16 | A | 0,025 | 68 | 60 | 53 | 50 |
| | Fe-EDTA-Komplex auf | 0,00005 | | | | |
| | Kaolin | 0,00095 | | | | |
| 17 | A | 0,025 | 68 | 61 | 53 | 51 |
| | Fe-EDTA-Komplex auf | 0,000125 | | | | |
| | Kaolin | 0,002375 | | | | |
| 18 | A | 0,025 | 68 | 59 | 52 | 51 |
| | Fe-EDTA-Komplex auf | 0,00025 | | | | |
| | Kaolin | 0,00475 | | | | |

*) EDTA = Ethylendiamintetraessigsäure

Le A 21 904

Um die Einwirkung der Cokatalysatoren auf die Alterungsbeständigkeit der Vulkanisate zu prüfen, wurden die
Mastiziermittel in folgender Kautschukmischung geprüft:

| | |
|---|---|
| Naturkautschuk (smoked sheets) | 100 Gew.-Teile |
| Zinkoxid | 5 Gew.-Teile |
| Stearinsäure | 2 Gew.-Teile |
| Dibenzothiacyldisulfid | 1 Gew.-Teil |
| Schwefel | 2,5 Gew.-Teile |

Ein Antioxidationsmittel wurde nicht zugesetzt, um die
Ergebnisse der Alterungsbeständigkeitsprüfung nicht zu
verfälschen. Der vorstehend genannten Mischung wurden
die Peptisierungsverbindungen und Cokatalysatoren zugesetzt; Vulkanisate wurden bei 140°C/40 Minuten in einer
hydraulischen Presse hergestellt. Die Vulkanisate wurden
6 Tage bei 70°C und einem Sauerstoffdruck von 21 atm
gealtert. Es wurden die Erhaltung der Festigkeit in
Prozent und die Änderung in der Härte gemessen. Einzelheiten sind der nachfolgenden Tabelle II zu entnehmen,
in der zum Vergleich als Stand der Technik Eisenphthalocyanin als Cokatalysator berücksichtigt wurde.

## Tabelle II

| | | | | | | | |
|---|---|---|---|---|---|---|---|
| Mischung | 110,5 | 110,5 | 110,5 | 110,5 | 110,5 | 110,5 | 110,5 |
| B | 0,5 | 0,5 | 0,5 | 0,5 | 0,5 | 0,5 | - |
| Fe-phthalocyanin auf Kaolin (1:22) | - | - | - | - | - | - | 0,5 |
| $FeSO_4$ auf Kaolin (1:19) | 1,0 | - | - | - | - | - | - |
| $Fe_3(PO_4)_2$ auf Kaolin (1:19) | - | 1,0 | - | - | - | - | - |
| Fe(II)-stearat auf Kaolin (1:19) | - | - | 1,0 | - | - | - | - |
| Fe(II)-sulfosalicylat auf Kaolin (1:19) | - | - | - | 1,0 | - | - | - |
| Fe-EDTA-Komplex auf Kaolin (1:19) | - | - | - | - | 1,0 | - | - |
| Fe-Dimethyl-glyoxim-Komplex auf Kaolin (1:19) | - | - | - | - | - | 1,0 | - |
| Erhalt der Festigkeit in % | 68 | 82 | 82 | 75 | 64 | 79 | 40 |
| Änderung der Härte in Härteeinheiten | -3 | -2 | 0 | -4 | -2 | -2 | -10 |

0157079

Das erfindungsgemäße Mastikationsverfahren kann auf Walzwerken, in Innenmischern oder Knetern, in heißer Luft oder Dampf durchgeführt werden. Der zu mastizierende Kautschuk kann weitere übliche Zusätze, wie Ruß, Füllstoffe, Weichmacher, Zinkoxid, Fettsäuren, Stabilisatoren und Vulkanisationsbeschleuniger enthalten.

Das erfindungsgemäße Verfahren ist auch bei Latices bei Raumtemperatur anwendbar.

Das erfindungsgemäße Verfahren kann an natürlichem Kautschuk, an synthetischen Dienelastomeren und Mischungen davon durchgeführt werden.

Synthetische Dienelastomere sind beispielsweise cis-Polybutadien, cis-Polyisopren, Polychloropren und Copolymere von Butadien mit anderen Comonomeren wie Styrol und Acrylnitril.

Le A 21 904

Patentansprüche

1. Mastiziermittel für Dienelastomere, das als Cokatalysator eine Verbindung aus den folgenden Gruppen enthält.

    a)    Eisen(II)- und Eisen(III)-Salze von anorganischen Säuren,

    b)    Eisen(II)- und Eisen(III)-Salze von organischen Carbonsäuren,

    c)    Eisen(II)- und Eisen(III)-Salze von aromatischen Mercaptanen,

    d)    Eisen(II)- und Eisen(III)-Komplexe mit Ethylendiamintetraessigsäure

    e)    Eisen(II)- und Eisen(III)-Cyanidkomplexe,

    f)    Eisen(II)- und Eisen(III)-Komplexe mit Dimethylglyoxim und

    g)    Eisen(II)- und Eisen(III)-Salze der Chinolincarbonsäure und der Sulfosalicylsäure.

2. Mastiziermittel nach Anspruch 1, dadurch gekennzeichnet, daß 0,1 bis 10 Gew.-Teile Cokatalysator auf 100 Gew.-Teile peptisierende Verbindung enthalten sind.

3. Mastiziermittel nach Anspruch 1, dadurch gekennzeichnet, daß der Cokatalysator aufgebracht auf einen inerten Träger eingesetzt wird.

Le A 21 904

- 12 -

0157079

4. Verfahren zur Mastikation von Dienelastomeren, dadurch gekennzeichnet, daß Mastiziermittel gemäß Anspruch 1 eingesetzt werden.

Le A 21 904